# EUROPEAN PATENT APPLICATION

(11) **EP 4 831 689 A1**
(43) Date of publication of application: **28.10.2026**
(21) Application number: 26163844.9
(22) Date of filing: 11.03.2026
(51) Int. Cl.: G01S 17/87, G01S 7/481, G01S 17/04, G01S 17/46

(54) **ROLLER SENSOR BAR**

(30) Priority: 23.04.2025 US 202519186724
(71) Applicant: SICK Product & Competence Center Americas LLC, Minneapolis, MN 55438 (US)
(72) Inventor: Ajagbusi, Daniel, Minneapolis, MN, 55443 (US); Bechtel, Robert, Minneapolis, MN, 55418 (US); Manion, Joseph, St. Paul, MN, 55118 (US); Stromberg, Luke, Minneapolis, MN, 55406 (US)
(74) Representative: Rieger, Daniel-Stephan

(57) **Abstract**

The roller sensor bar is a sensor array for detecting and locating objects carried by a roller-type conveyor. The roller sensor bar includes alternating light emitters and light receivers for optically detecting and locating the object. The light emitters are actuated sequentially, such that only one of the light emitters emits at one time. The light beams are each emitted with an angular spread such that each point of a continuous region above the roller sensor bar is illuminated by at least one of the emitted light beams. Each of the light receivers is configured to generate a respective detection signal upon detection of a reflected light beam. Each of the plurality of light receivers is further configured to measure an intensity of the reflected light beam. The detection signal includes position information corresponding to a position of the light receiver and the measured intensity of the reflected light beam.

## Description

The disclosure of the present patent application relates to object detection for conveyors, and particularly to a sensor array configured for installation between rollers of a conveyor.

A roller sensor bar is a sensor for conveyors which is mounted between rollers and is used, for example, for detecting objects with irregular leading edges. A conventional roller sensor bar 100 is shown in Figs. 2-4. As seen in Fig. 2, the conventional roller sensor bar 100 has an elongated housing 104 with a number of combined optical emitters and receivers 102. The elongated housing 104 is sized and shaped to fit unobtrusively between a pair of rollers R in the conveyor C. Fig. 3 illustrates the roller sensor bar 100 with no object above the combined optical emitters and receivers 102. In Fig. 4, the edge of an object O has moved above one of the combined optical emitters and receivers 102 causing the emitted light to be reflected back, thus allowing the edge of object O to be localized.

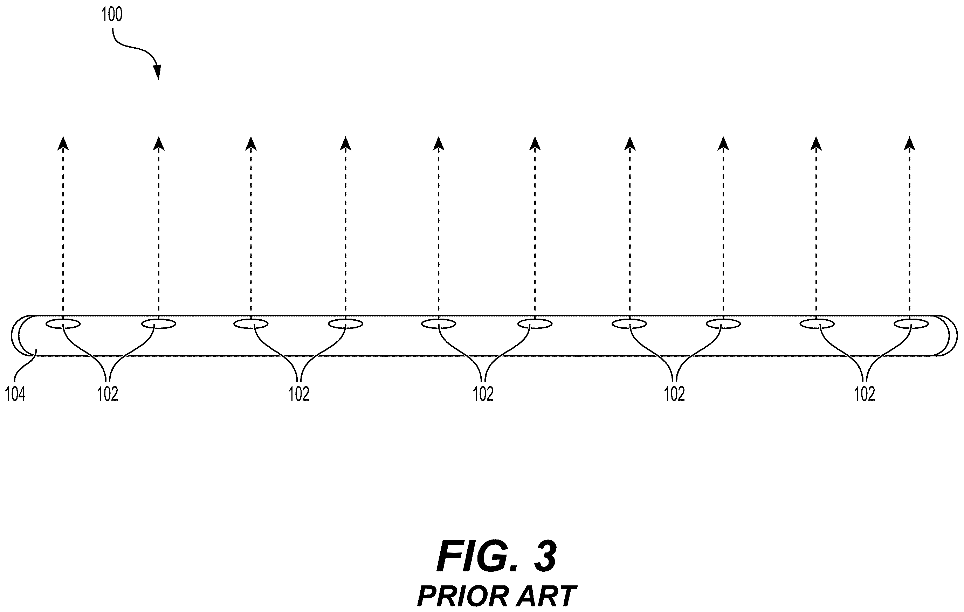

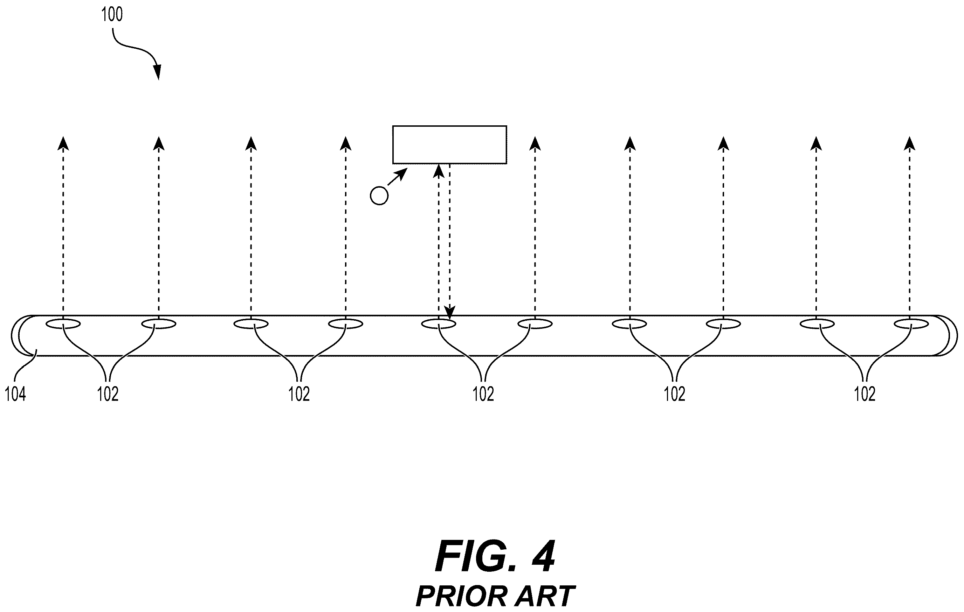

As shown in Figs. 3 and 4, the resolution of the sensor is dependent on the number of combined optical emitters and receivers 102. However, even if one were to increase the number of combined optical emitters and receivers 102 (and correspondingly decrease the distance between them), the detection of objects would still be discrete; i.e., the individual sensing elements would still output position/detection signals in a stepwise manner. Any object edge small enough to fit between two of the emitted light beams would remain undetected. Practically, there is also a limit to the number of combined optical emitters and receivers which can be used. Increasing the number of the combined optical emitters and receivers introduces problems with alignment of the emitted light beams, and interference of the light emitted by two or more of the emitters creates a minimum distance threshold between emitters. Thus, a roller sensor bar solving the aforementioned problems is desired.

The roller sensor bar is a sensor array for detecting and locating objects carried by a roller-type conveyor. The roller sensor bar includes an elongated housing having longitudinally opposed first and second ends, a first combined emitter and receiver, a second combined emitter and receiver, a plurality of light emitters and a plurality of light receivers, each mounted on the housing. The elongated housing is adapted for mounting between adjacent rollers of a conveyor. The first combined emitter and receiver is configured to emit a first light beam and to detect a reflected first light beam. The first combined emitter and receiver is positioned adjacent the first end of the elongated housing. Similarly, the second combined emitter and receiver is configured to emit a second light beam and to detect a reflected second light beam. The second combined emitter and receiver is positioned adjacent the second end of the elongated housing.

The plurality of light emitters are positioned between the first combined emitter and receiver and the second combined emitter and receiver, and each of the plurality of light emitters is configured to emit a third light beam. The first, second and third light beams may be similar to one another in terms of wavelength, phase, pulse duration, etc., however, it should be understood that the division of the emitted light into the first, second and third light beams herein is for purposes of easily distinguishing between, and describing, the first combined emitter and receiver, the second combined emitter, and the light emitters which are positioned therebetween. The light emitters only emit light and do not also include sensors for receiving and detecting reflected light.

The plurality light receivers are positioned between the first combined emitter and receiver and the second combined emitter and receiver, and each of the plurality of light receivers is configured to detect reflected third light beams. A controller is in communication with the first combined emitter and receiver, the second combined emitter and receiver, the plurality of light emitters, and the plurality of light receivers.

The plurality of light emitters and the plurality of light receivers are arranged such that they alternate with respect to one another. The plurality of light emitters and the plurality of light receivers may be arranged such that one of the light receivers is positioned adjacent each of the first and second combined emitter and receiver. The controller is configured to actuate the first combined emitter and receiver, the plurality of light emitters, and the second combined emitter and receiver such that the first combined emitter and receiver, the plurality of light emitters, and the second combined emitter and receiver respectively emit the first light beam, the third light beams and the second light beam sequentially, such that only one of the first combined emitter and receiver, the plurality of light emitters, and the second combined emitter and receiver actively emits at one time. The controller is further configured to implement a sequence of emission to cause the first light beam, the third light beams and the second light beam to be sequentially emitted in a direction from the first end of the elongated housing to the second end of the elongated housing. The controller is further configured to repeat the sequence of emission once a full emission cycle has completed.

The first light beam, the second light beam and the third light beams are each emitted with an angular spread such that each point of a continuous region above the elongated housing is illuminated by at least one of the first light beam, the second light beam and the third light beams. The third light beams angularly spread towards the first end and the second end of the elongated housing. The first light beam may angularly spread between a vertical direction and towards the second end of the elongated housing, and the second light beam may angularly spread between the vertical direction and towards the first end of the elongated housing.

Each of the first combined emitter and receiver, the second combined emitter and receiver, and the plurality of light receivers is configured to generate a respective detection signal upon detection of the reflected first light beam, the reflected second light beam and at least one of the reflected third light beams, respectively. Each of the first combined emitter and receiver, the second combined emitter and receiver, and the plurality of light receivers is further configured to measure an intensity of the reflected first light beam, the reflected second light beam and the reflected third light beams, respectively. The respective detection signal includes position information corresponding to a position of the respective one of the first combined emitter and receiver, the second combined emitter and receiver, and the plurality of light receivers, and the respective detection signal further includes the measured intensity of the corresponding one of the reflected first light beam, the reflected second light beam and the reflected third light beams. The controller is configured to locate a position of an object based on one or more received detection signals from the first combined emitter and receiver, the second combined emitter and receiver, and the plurality of light receivers.

These and other features of the present subject matter will become readily apparent upon further review of the following specification.

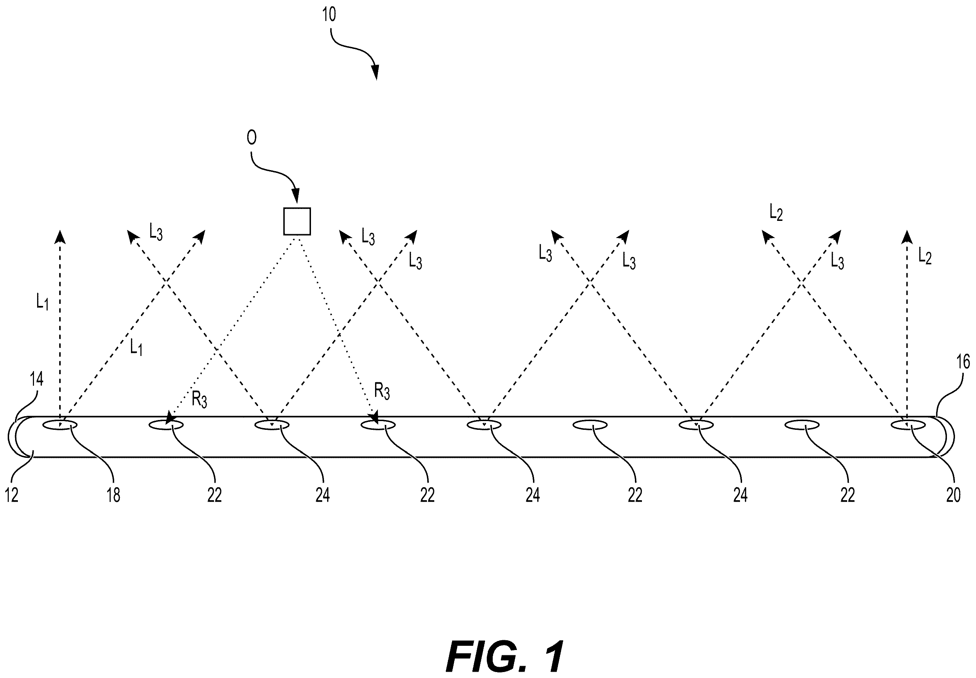

Fig. 1 diagrammatically illustrates a roller sensor bar.

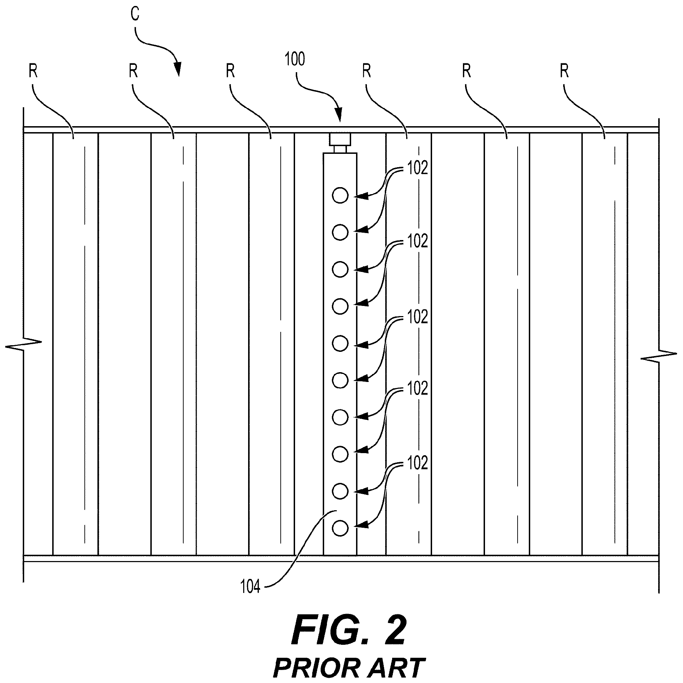

Fig. 2 is an environmental perspective view of a conventional roller sensor bar.
Fig. 3 diagrammatically illustrates the conventional roller sensor bar of Fig. 2.
Fig. 4 diagrammatically illustrates the conventional roller sensor bar of Fig. 2 in use.

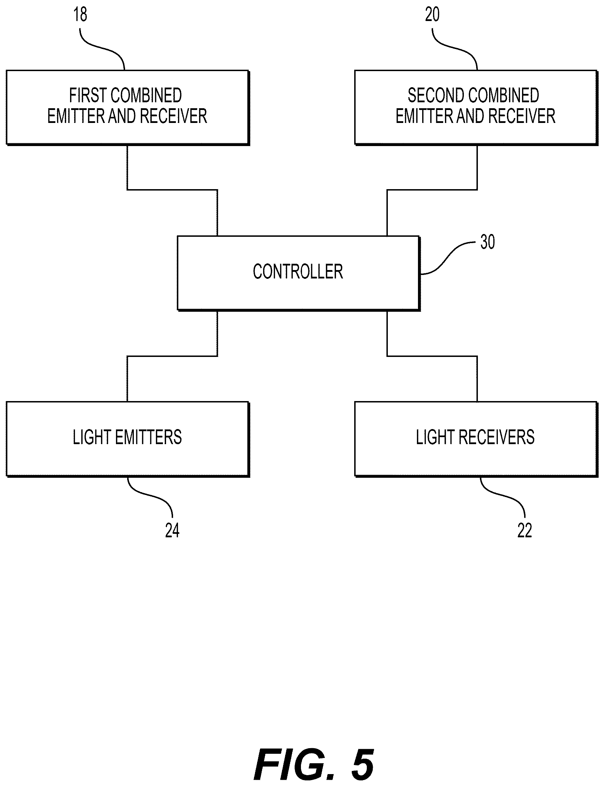

Fig. 5 is a block diagram illustrating system components of the roller sensor bar.

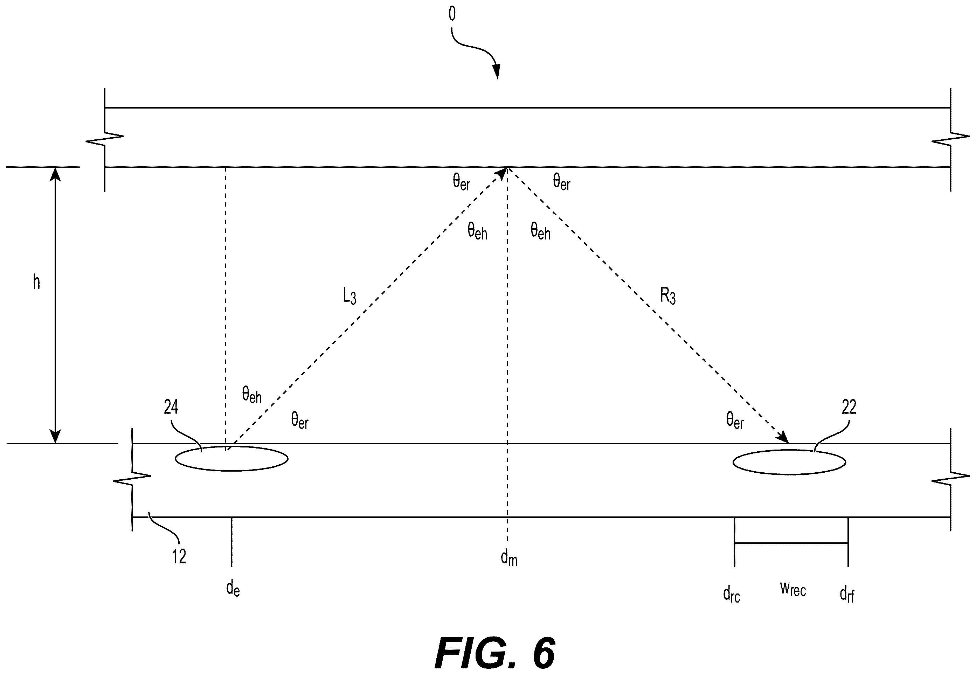

Fig. 6 diagrammatically illustrates object detection using the roller sensor bar.

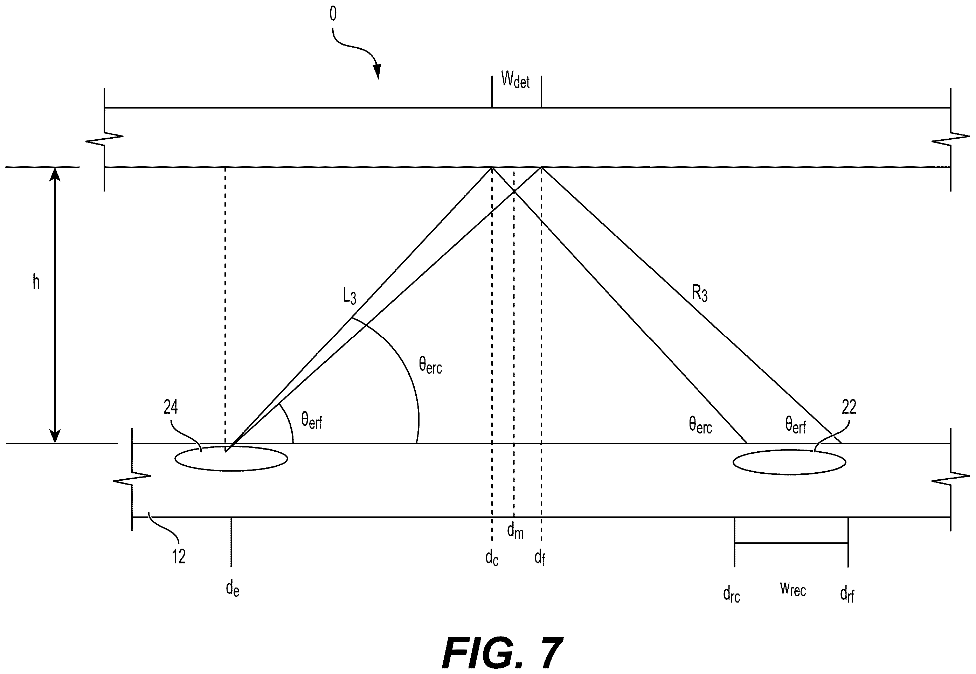

Fig. 7 diagrammatically illustrates object detection using the roller sensor bar.

Similar reference characters denote corresponding features consistently throughout the attached drawings.

The roller sensor bar 10 is a sensor array for detecting and locating objects carried by a roller-type conveyor. As shown in Fig. 1, the roller sensor bar 10 includes an elongated housing 12 having longitudinally opposed first and second ends 14 and 16, respectively. It should be understood that the overall shape and relative dimensions of housing 12 are shown in Fig. 1 for exemplary purposes only and may be varied. The elongated housing 12 is adapted for mounting between adjacent rollers of a conveyor, such as that illustrated in Fig. 2, as a non-limiting example. A first combined emitter and receiver 18, a second combined emitter and receiver 20, a plurality of light receivers 22 and a plurality of light emitters 24 are mounted on the housing 12. The first combined emitter and receiver 18 is configured to emit a first light beam L₁ and to detect a reflected first light beam. The first combined emitter and receiver 18 is positioned adjacent the first end 14 of the elongated housing 12. Similarly, the second combined emitter and receiver 20 is configured to emit a second light beam L₂ and to detect a reflected second light beam. The second combined emitter and receiver 20 is positioned adjacent the second end 16 of the elongated housing 12. The first combined emitter and receiver 18 and the second combined emitter and receiver 20 each combine a light emitter and a light receiver within one module. It should be understood that any suitable type of light emitting element, such as a light emitting diode (LED), a laser or the like may be used. It should be further understood that any suitable type of light receiving sensor may be used.

The plurality of light emitters 24 are positioned between the first combined emitter and receiver 18 and the second combined emitter and receiver 20, and each of the plurality of light emitters 24 is configured to emit a third light beam L₃. It should be understood that any suitable type of light emitting element, such as a light emitting diode (LED), a laser or the like may be used. The first, second and third light beams L₁, L₂ and L₃ may be similar to one another in terms of wavelength, phase, pulse duration, etc., however, it should be understood that the division of the emitted light into the first, second and third light beams L₁, L₂ and L₃ herein is for purposes of easily distinguishing between, and describing, the first combined emitter and receiver 18, the second combined emitter 20, and the light emitters 24 which are positioned therebetween. The light emitters 24 only emit light and do not also include sensors for receiving and detecting reflected light.

The plurality light receivers 22 are positioned between the first combined emitter and receiver 18 and the second combined emitter and receiver 20, and each of the plurality of light receivers 22 is configured to receive and detect reflected third light beams R₃. It should be understood that any suitable type of light receiving sensor may be used. Similar to the first, second and third light beams L₁, L₂, L₃, respectively, the reflected first light beams (detected by the first combined emitter and receiver 18), the reflected second light beams (detected by the second combined emitter and receiver 20), and the reflected third light beams R₃ may be similar to one another in terms of wavelength, pulse duration, etc., however, it should be understood that the division of the reflected light into the first, second and third reflected light beams herein is for purposes of easily distinguishing between, and describing, the first combined emitter and receiver 18, the second combined emitter 20, and the light receivers 22 which are positioned therebetween. The light receivers 22 only receive and detect reflected light and do not also include emitters for emitting light.

As illustrated in Fig. 5, a controller 30 is in communication with the first combined emitter and receiver 18, the second combined emitter and receiver 20, the plurality of light emitters 24, and the plurality of light receivers 22. Although the non-limiting example of Fig. 1 shows four light receivers 22 and three light emitters 24, it should be understood that any suitable number of light receivers 22 and light emitters 24 may span the length elongated housing 12. For a conventional conveyor, as a non-limiting example, between 10 and 20 pairs of light receivers 22 and corresponding light emitters 24 may be used. Controller 30 may be housed within elongated housing 12 or may be remote from elongated housing 12.

As shown in Fig. 1, the plurality of light emitters 24 and the plurality of light receivers 22 are arranged such that they alternate with respect to one another. The plurality of light emitters 24 and the plurality of light receivers 22 may be arranged such that one of the light receivers 22 is positioned adjacent each of the first and second combined emitter and receiver 18, 20, respectively; i.e., as shown in Fig. 1, one of the light receivers 22 is positioned immediately adjacent to the first combined emitter and receiver 18 and another one of the light receivers 22 is positioned immediately adjacent to the second combined emitter and receiver 20. The controller 30 is configured to actuate the first combined emitter and receiver 18, the plurality of light emitters 24, and the second combined emitter and receiver 20 such that the first combined emitter and receiver 18, the plurality of light emitters 24, and the second combined emitter and receiver 20 respectively emit the first light beam L₁, the third light beams L₃ and the second light beam L₂ sequentially, such that only one of the first combined emitter and receiver 18, the light emitters 24, and the second combined emitter and receiver 20 actively emits at one time.

Although Fig. 1 shows first light beam L₁, the third light beams L₃ and the second light beam L₂ all being emitted at the same time, it should be understood that this is for purposes of illustrating the coverage of the first light beam L₁, the third light beams L₃ and the second light beam L₂ rather than depicting the roller sensor bar 10 in actual use. During use, only one of the first combined emitter and receiver 18, a single one of the light emitters 24, and the second combined emitter and receiver 20 will emit at one time, thus there will only be first light beam L₁, second light beam L₂, or a single third light beam L₃ emitted by a single one of the light emitters 24 at any one time. Emission is carried out sequentially, such that, as a non-limiting example, using the orientation of Fig. 1, the first combined emitter and receiver 18 will emit the first light beam L₁ as a pulse with a predetermined duration and then, following emission of the first light beam L₁ and deactivation of the emitter of the first combined emitter and receiver 18, after a preset time period, the first light emitter 24 to the right of the first combined emitter and receiver 18 will emit a third light beam L₃ as a pulse with the same predetermined duration and then, following emission of the third light beam L₃ and deactivation of the light emitter 24, after the same preset time period, the next light emitter 24 to the right will be activated. This sequence will continue until the emitter of the second combined emitter and receiver 20 emits the second light beam L₂, after which the sequential operation of the emitters will begin again. Because only a single emitter is activated at any one time, when the reflected light is detected by one or more of the light receivers, not only are the receiver positions known, but the position of the emitter is also known.

The illustration of first, second and third light beams L₁, L₂ and L₃ emitted together in Fig. 1 illustrates that the first light beam L₁, the second light beam L₂ and the third light beams L₃ are each emitted with an angular spread such that each point of a continuous region above the elongated housing 12 is illuminated by at least one of the first light beam L₁, the second light beam L₂ and the third light beams L₃. Thus, an object O to be detected will never be in a position above elongated housing 12 which cannot be detected.

Each of the first combined emitter and receiver 18, the second combined emitter and receiver 20, and the plurality of light receivers 22 is configured to generate a respective detection signal upon detection of the reflected first light beam, the reflected second light beam and at least one of the reflected third light beams R₃, respectively. Each of the first combined emitter and receiver 18, the second combined emitter and receiver 20, and the plurality of light receivers 22 is further configured to measure an intensity of the reflected first light beam, the reflected second light beam and the reflected third light beams R₃, respectively. The respective detection signal includes position information corresponding to a position of the respective one of the first combined emitter and receiver 18, the second combined emitter and receiver 20, and the plurality of light receivers 22, and the respective detection signal further includes the measured intensity of the corresponding one of the reflected first light beam, the reflected second light beam and the reflected third light beams R₃. The controller 30 is configured to locate a position of the object O based on one or more received detection signals from the first combined emitter and receiver 18, the second combined emitter and receiver 20, and the plurality of light receivers 22.

It should be understood that controller 30 may implement any suitable type of algorithm or program to calculate the location of object O or any portion thereof, such as its edges. With reference to Figs. 6 and 7, a non-limiting example of such an algorithm based on differential intensity analysis and trigonometric interpolation follows. When an object O is present, the lower surface of object O reflects light back to the light receivers 18, 20, 22. Because of the overlapping beams of light, the object's position will result in a specific pattern of intensities across the light receivers 18, 20, 22. For example, if the object O is closer to a first receiver than a second receiver, the first sensor will record a slightly higher intensity relative to the second sensor. Controller 30 can then use this data to calculate the exact position of the detected object O.

Initially, determination of the boundaries of detection zones is of interest. Fig. 6 illustrates a simplified scenario in which a 45° emitted third light beam L₃ hits object O at a midpoint between one of the light emitters 24 and an adjacent one of the light receivers 22. In Fig. 6, h represents the distance from the top surface of elongated housing 12 to the lower surface of object O. It is assumed that the light emitters 24 and the light receivers 22 are flush with the top surface of the elongated housing 12. θₑᵣ is the angle of the emitted light beam L₃ with respect to the horizontal, θₑₕ is the angle of the emitted light beam L₃ with respect to the vertical (i.e., the height direction), and dₑ is the position of the light emitter 24. For ease of calculations, this position may be given a value of zero. The position of the midpoint is represented as dₘ, the position of the "close" side (i.e., closest to the light emitter 24) of the light receiver 22 is represented as d_{rc}, and the position of the "far" side (i.e., farthest from the light emitter 24) of the light receiver 22 is represented as d_{rf}. The width of the light receiver 22 is given by w_{rec} = d_{rf} - d_{rc}. Due to the symmetry of Fig. 6, the angle of the third reflected light beam R₃ is also θₑᵣ with respect to the horizontal.

When the light emitter 24 projects the third light beam L₃ onto the object O, the light reflects in multiple directions based on the surface properties. Fig. 6 represents a simplified scenario, considering single linear light rays. In Fig. 7, the third light beam L₃ is shown with a more realistic angular spread, emitting as a cone of light, spanning between a "close" conical side (i.e., the side closest to the center of light emitter 24), which has a close emitted ray angle of θ_{erc}, and a "far" conical side (i.e., the side farthest from the center of light emitter 24), which as a far emitted ray angle of θ_{erf}. Due to the symmetry of reflection, the "close" angle of reception of third reflected beam R₃ (closest to light emitter 24) is also θ_{erc}, and the "far" angle of reception of third reflected beam R₃ (farthest from light emitter 24) is also θ_{erf}. Receivers 22 positioned at various distances will detect portions of the reflected light beam L₃. The geometry of the system creates specific detection zones that can be precisely calculated. When the third light beam L₃ from light emitter 24 strikes the bottom surface of object O, it creates a cone of reflected light (third reflected light beam R₃). Each light receiver 22 has a specific field of view within which it can detect this reflected light. The boundaries of these detection zones (i.e., the "close" edge and the "far" edge) are determined by the physical arrangement of the components and the distance to the object.

In Fig. 7, since the third light beam L₃ is emitted as a cone, it strikes (and is reflected from) a region surrounding the midpoint located at position dₘ. The point where third light beam L₃ strikes object O closest to light emitter 24 is located at position dₑ and the point where third light beam L₃ strikes object O farthest from light emitter 24 is located at position d_{f}, where ${d}_{m} = \frac{{d}_{f} - {d}_{c}}{2}$. The width of the detectable area is given by w_{det} = d_{f} - d_{c}.

The position of the light emitter 24, dₑ, is known, as are the positions related to the light receiver 22, d_{rc} and d_{rf}. The height h is also known. w_{rec} is known because w_{rec} = d_{rf} - d_{rc}. d_{c} is given by ${d}_{c} = \frac{h}{tan \left({θ}_{erc}\right)}$, and d_{f} is given by ${d}_{f} = \frac{h}{tan \left({θ}_{erf}\right)}$. Recognizing that w_{rec} is twice w_{det}, ${d}_{c} = \frac{{d}_{rc}}{2}$ and ${d}_{f} = \frac{{d}_{rf}}{2}$, and d_{rc} and d_{rf} are both known. Thus, one can calculate θ_{erc} from known values as ${θ}_{erc} = {tan}^{- 1} \left(\frac{h}{{d}_{c}}\right)$ and, similarly, one can calculate θ_{erf} from known values as ${θ}_{erf} = {tan}^{- 1} \left(\frac{h}{{d}_{f}}\right)$. The detectable boundaries have been calculated at this point and, from the values of θ_{erc} and θ_{erf}, the percentage of the light beam's energy which is detectable by the receiver can also be calculated. By defining an angular difference as θ_{fov} = θ_{erc} - θ_{erf}, the percentage of energy detectable by light receiver 22, E_{det}, is given by ${E}_{det} = \frac{{θ}_{fov}}{{θ}_{er}} \times {E}_{emit}$, where Eₑₘᵢₜ is the energy of the light beam emitted by light emitter 24

Light receivers 22 that are illuminated by the full cone of reflected light (third reflected light beam/cone R₃) produce a consistent signal. In such cases, adjacent receivers 22 within this fully illuminated zone should record nearly identical values, with any decrease attributable solely to distance (and the inherent attenuation of light intensity). By analyzing the intensity readings from the leftmost and rightmost receivers 22 that detect reflected light, the midpoint of the detected object O can be estimated using a weighted average approach.

The midpoint between the emitter and the receiver is ${d}_{m} = \frac{{d}_{e} + {d}_{r}}{2}$, where dᵣ is the midpoint between d_{rc} and d_{rf} in Figs. 6 and 7. The unweighted midpoint of the detected object O, d_{c}, is given by ${d}_{c} = \frac{max \left({d}_{m}\right) - min \left({d}_{m}\right)}{2}$. The weighted midpoint of the detected object O, d_{wc}, is given by ${d}_{wc} = \frac{\sum {pd}_{m}}{\sum p}$, where p is the light strength measured by light receiver 22. The estimated midpoint of the detected object O, *D_{c},* is then given by ${D}_{c} = \frac{{d}_{c} + {d}_{wc}}{2}$.

The calculations of the estimated midpoint of the detected object O, such as in the non-limiting example of locating object O discussed above, as well as the determination of detectable boundaries, may be performed by controller 30. It should be understood that controller 30 may be any suitable type of controller, computer, processor, programmable logic controller or the like, including, or in communication with, any suitable type of non-transitory computer readable memory.

As discussed above, the controller 30 is configured to actuate the first combined emitter and receiver 18, the plurality of light emitters 24, and the second combined emitter and receiver 20 such that the first combined emitter and receiver 18, the plurality of light emitters 24, and the second combined emitter and receiver 20 respectively emit the first light beam L₁, the third light beams L₃ and the second light beam L₂ sequentially, such that only one of the first combined emitter and receiver 18, the light emitters 24, and the second combined emitter and receiver 20 actively emits at one time. This sequential operation ensures that any reflected light received by the light receivers can be unambiguously attributed to a specific light emitter. The sequential cycling through the emitters is performed very rapidly, on the order of microseconds to a few milliseconds per emitter. As a non-limiting example, each light emitter may typically power on in the range of a few microseconds; i.e., in this non-limiting example, an emitter might require around 1-10 µs to become fully active. Each light receiver can record data in a similar timeframe, ranging from a few microseconds to a couple of milliseconds depending on its design and processing needs. In an exemplary system in which an emitter and the corresponding receivers operate sequentially, if the emitter takes 10 µs to power on and each of six receivers takes 5 µs to record data, the full cycle would take approximately 10 µs + (6 × 5 µs) = 40 µs. The exact speed may be chosen based on application requirements and the capabilities of the electronics.

The use of this sequential pulsing allows the system to precisely correlate the timing of a pulse with the detected reflection, allowing the algorithm to accurately map the reflected intensity back to a known emitter. This is particularly useful when using overlapping beams, as the timing information helps disambiguate which part of the intensity profile corresponds to which emitter. During each pulse, all receivers are activated, and the recorded light intensity is used to determine positional information about the detected object O. As a non-limiting example, when one of light emitters 24 is pulsed, two of the light receivers 22 may register the reflected light, with receivers farther away from light emitter 24 not detecting the reflection since they fall outside of the beam's effective spread at that moment. If the object O spans a larger width, thus engaging multiple receivers and emitters, the system can aggregate readings from all emitters at each time step, enabling a more comprehensive measurement of the object's length.

Returning to the Fig. 1 and the angular spread of the third light beams L₃ emitted by light emitters 24, it should be understood that any suitable type of lenses or other optical elements may be used to create a "fan" shaped light beam such that each "fan" or cone of light overlaps to cover every point at the height h above the elongated housing 12 (i.e., the height at which the object O is located). As best seen in Fig. 1, the first light beam L₁ emitted by the first combined emitter and receiver 18 and the second light beam L₂ emitted by the second combined emitter and receiver 20 are each only half cones of light, with the light spanning between the vertical (at the edge nearest the respective end of elongated housing 12) and a maximum angle which is angled inward with respect to the corresponding end of the elongated housing 12. In other words, the third light beams L₃ angularly spread toward both the first end 14 and the second end 16 of the elongated housing 12, but the first light beam L₁ angularly spreads only between the vertical direction and towards the second end 16 of the elongated housing 12, and the second light beam L₂ angularly spreads between the vertical direction and towards the first end 14 of the elongated housing 12.

It should be understood that any suitable type of optics may be used to prevent the first light beam L₁ and the second light beam L₂ from projecting beyond the respective ends 14 and 16 of elongated housing 12, such as, as a non-limiting example, a mask or other barrier covering a portion of a lens. In practice, lenses and other common optical elements will typically produce light beams with variations in light intensity, particularly in the form of variations of intensity in the horizontal direction at the height h. To address this, a dual-tier calibration process may be used in which each light emitter 18, 20, 24 first undergoes a baseline calibration during installation. This step records the specific emission profile of each light emitter 18, 20, 24 and establishes individual performance criteria. Next, once individual profiles are set, controller 30 may conduct an overall calibration in order to map the entire detection area's intensity profile.

It is to be understood that the roller sensor bar is not limited to the specific embodiments described above, but encompasses any and all embodiments within the scope of the generic language of the following claims enabled by the embodiments described herein, or otherwise shown in the drawings or described above in terms sufficient to enable one of ordinary skill in the art to make and use the claimed subject matter.

## Claims

1. A roller sensor bar, comprising:
an elongated housing having longitudinally opposed first and second ends;
a first combined emitter and receiver mounted on said elongated housing, wherein the first combined emitter and receiver is configured to emit a first light beam and to detect a reflected first light beam, and wherein the first combined emitter and receiver is positioned adjacent the first end of the elongated housing;
a second combined emitter and receiver mounted on said elongated housing, wherein the second combined emitter and receiver is configured to emit a second light beam and to detect a reflected second light beam, and wherein the second combined emitter and receiver is positioned adjacent the second end of the elongated housing;
a plurality of light emitters mounted on said elongated housing and positioned between the first combined emitter and receiver and the second combined emitter and receiver, wherein each of the plurality of light emitters is configured to emit a third light beam;
a plurality light receivers mounted on said elongated housing and positioned between the first combined emitter and receiver and the second combined emitter and receiver, wherein each of the plurality of light receivers is configured to detect reflected third light beams; and
a controller in communication with the first combined emitter and receiver, the second combined emitter and receiver, the plurality of light emitters, and the plurality of light receivers,
wherein the plurality of light emitters and the plurality of light receivers are arranged such that they alternate with respect to one another,
wherein each of the first combined emitter and receiver, the second combined emitter and receiver, and the plurality of light receivers is configured to generate a respective detection signal upon detection of the reflected first light beam, the reflected second light beam and at least one of the reflected third light beams, respectively,
wherein each of the first combined emitter and receiver, the second combined emitter and receiver, and the plurality of light receivers is further configured to measure an intensity of the reflected first light beam, the reflected second light beam and the reflected third light beams, respectively, the respective detection signal including position information corresponding to a position of the respective one of the first combined emitter and receiver, the second combined emitter and receiver, and the plurality of light receivers, and the respective detection signal further including the measured intensity of the corresponding one of the reflected first light beam, the reflected second light beam and the reflected third light beams, and
wherein the controller is configured to locate a position of an object based on one or more received detection signals from the first combined emitter and receiver, the second combined emitter and receiver, and the plurality of light receivers.

2. The roller sensor bar as recited in claim 1, wherein one of the light receivers is positioned adjacent each of the first and second combined emitter and receiver.

3. The roller sensor bar as recited in claim 1, wherein the controller is configured to actuate the first combined emitter and receiver, the plurality of light emitters, and the second combined emitter and receiver such that the first combined emitter and receiver, the plurality of light emitters, and the second combined emitter and receiver respectively emit the first light beam, the third light beams and the second light beam sequentially, such that only one of the first combined emitter and receiver, the plurality of light emitters, and the second combined emitter and receiver actively emits at one time.

4. The roller sensor bar as recited in claim 3, wherein the controller is further configured to implement a sequence of emission to cause the first light beam, the third light beams and the second light beam to be sequentially emitted in a direction from the first end of the elongated housing to the second end of the elongated housing.

5. The roller sensor bar as recited in claim 4, wherein the controller is further configured to repeat the sequence of emission once a full emission cycle has completed.

6. The roller sensor bar as recited in claim 1, wherein the first light beam, the second light beam and the third light beams are each emitted with an angular spread such that each point of a continuous region above the elongated housing is illuminated by at least one of the first light beam, the second light beam and the third light beams.

7. The roller sensor bar as recited in claim 6, wherein the third light beams angularly spread towards the first end and the second end of the elongated housing.

8. The roller sensor bar as recited in claim 7, wherein the first light beam angularly spreads between a vertical direction and towards the second end of the elongated housing, and wherein the second light beam angularly spreads between the vertical direction and towards the first end of the elongated housing.

9. The roller sensor bar as recited in claim 1, wherein the elongated housing is adapted for mounting between adjacent rollers of a conveyor.

10. A roller sensor bar, comprising:
an elongated housing having longitudinally opposed first and second ends;
a first combined emitter and receiver mounted on said elongated housing, wherein the first combined emitter and receiver is configured to emit a first light beam and to detect a reflected first light beam, and wherein the first combined emitter and receiver is positioned adjacent the first end of the elongated housing;
a second combined emitter and receiver mounted on said elongated housing, wherein the second combined emitter and receiver is configured to emit a second light beam and to detect a reflected second light beam, and wherein the second combined emitter and receiver is positioned adjacent the second end of the elongated housing;
a plurality of light emitters mounted on said elongated housing and positioned between the first combined emitter and receiver and the second combined emitter and receiver, wherein each of the plurality of light emitters is configured to emit a third light beam;
a plurality light receivers mounted on said elongated housing and positioned between the first combined emitter and receiver and the second combined emitter and receiver, wherein each of the plurality of light receivers is configured to detect reflected third light beams; and
a controller in communication with the first combined emitter and receiver, the second combined emitter and receiver, the plurality of light emitters, and the plurality of light receivers,
wherein the plurality of light emitters and the plurality of light receivers are arranged such that they alternate with respect to one another,
wherein each of the first combined emitter and receiver, the second combined emitter and receiver, and the plurality of light receivers is configured to generate a respective detection signal upon detection of the reflected first light beam, the reflected second light beam and at least one of the reflected third light beams, respectively,
wherein each of the first combined emitter and receiver, the second combined emitter and receiver, and the plurality of light receivers is further configured to measure an intensity of the reflected first light beam, the reflected second light beam and the reflected third light beams, respectively, the respective detection signal including position information corresponding to a position of the respective one of the first combined emitter and receiver, the second combined emitter and receiver, and the plurality of light receivers, and the respective detection signal further including the measured intensity of the corresponding one of the reflected first light beam, the reflected second light beam and the reflected third light beams,
wherein the controller is configured to locate a position of an object based on one or more received detection signals from the first combined emitter and receiver, the second combined emitter and receiver, and the plurality of light receivers, and
wherein the controller is further configured to actuate the first combined emitter and receiver, the plurality of light emitters, and the second combined emitter and receiver such that the first combined emitter and receiver, the plurality of light emitters, and the second combined emitter and receiver respectively emit the first light beam, the third light beams and the second light beam sequentially, such that only one of the first combined emitter and receiver, the plurality of light emitters, and the second combined emitter and receiver actively emits at one time.

11. The roller sensor bar as recited in claim 10, wherein one of the light receivers is positioned adjacent each of the first and second combined emitter and receiver.

12. The roller sensor bar as recited in claim 10, wherein the controller is further configured to implement a sequence of emission to cause the first light beam, the third light beams and the second light beam to be sequentially emitted in a direction from the first end of the elongated housing to the second end of the elongated housing.

13. The roller sensor bar as recited in claim 12, wherein the controller is further configured to repeat the sequence of emission once a full emission cycle has completed.

14. The roller sensor bar as recited in claim 10, wherein the first light beam, the second light beam and the third light beams are each emitted with an angular spread such that each point of a continuous region above the elongated housing is illuminated by at least one of the first light beam, the second light beam and the third light beams.

15. The roller sensor bar as recited in claim 14, wherein the third light beams angularly spread towards the first end and the second end of the elongated housing.

16. The roller sensor bar as recited in claim 15, wherein the first light beam angularly spreads between a vertical direction and towards the second end of the elongated housing, and wherein the second light beam angularly spreads between the vertical direction and towards the first end of the elongated housing.

17. The roller sensor bar as recited in claim 10, wherein the elongated housing is adapted for mounting between adjacent rollers of a conveyor.
